# EUROPÄISCHE PATENTSCHRIFT

(11) **EP 0 587 595 B1**
(45) Veröffentlichungstag und Bekanntmachung des Hinweises auf die Patenterteilung: **11.01.1995**
(21) Anmeldenummer: 92909835.8
(22) Anmeldetag: 11.05.1992
(51) Int. Cl.: F16K 3/316, F16K 3/02, F16K 27/04

(54) **ABSPERRSCHIEBER**
GATE VALVE
ROBINET-VANNE

(30) Priorität: 04.06.1991 DE 4118292
(43) Veröffentlichungstag der Anmeldung: 23.03.1994
(73) Patentinhaber: KSB Aktiengesellschaft, 67227 Frankenthal (DE)
(72) Erfinder: KLIMPKE, Reinhard, D-8501 Eckental (DE)
(86) Internationale Anmeldenummer: EP9201027
(87) Internationale Veröffentlichungsnummer: WO9221902

(56) Entgegenhaltungen:
- AU-A- 4 023 868
- DE-A- 2 705 960
- FR-A- 2 476 791
- US-A- 1 998 882

## Beschreibung

Die Erfindung betrifft einen Absperrschieber mit einem in das Gehäuse des Absperrschiebers eingeschobenen, mit Aussparungen versehenen Rohrteil, welches ausgestattet ist mit zwei Führungsleisten für das Verschlußstück des Absperrschiebers.

Bei der Erfüllung der Aufgabe, das Verschlußglied des Absperrschiebers während der Aufwärts- und Abwärtsbewegung zu führen und zu einer exakten Anlage an den Sitzringen zu bringen, muß eine Schieberführung die auf das Verschlußglied wirkenden Strömungskräfte aufnehmen. Bei Absperrschiebern, die keine außenliegenden Arretierkloben besitzen, muß im übrigen das Drehmoment der Spindel von der Schieberführung aufgenommen werden.

In den meisten Fällen ist die Schieberführung fest mit der Gehäusewand verbunden. Sie ist dabei entweder als eingeschweißte Leiste oder als mechanisch eingearbeitete Nut oder Leiste ausgebildet, was bedeutet, daS der Werkstoff der Schieberführung dem des Gehäuses entspricht. Die für die Gehäuse verwendeten Werkstoffe verfügen im allgemeinen aber nur über sehr niedrige zulässige Flächenpressungen. Nun kommt es jedoch bei Absperrschiebern oft zu sehr hohen - von Nennweite und Druckdifferenz abhängigen - Flächenpressungen an den Schieberführungen. Hieraus resultieren wiederum viele Beschädigungen, die sich bei in Rohrleitungen eingeschweißten Gehäusen nicht oder nur sehr schwer reparieren lassen. Dieser Umstand hat unmittelbare Auswirkungen auf die Funktionsfähigkeit eines solchen Absperrschiebers.

Durch die DE-C-2 113 415 ist auch bereits eine in das Schiebergehäuse eingesetzte Schieberführung bekannt. Diese wirkt allerdings zusammen mit einem mit parallel verlaufenden Wänden ausgestatteten Verschlußglied, das auf den ebenen Wänden der Schieberführung gleitet. Für ein Verschlußstück mit einer keilförmigen Kontur und für eine Führung mittels Führungsleisten ist diese im wesentlichen aus zwei auf die Sitzringe des Absperrschiebers aufgeschobenen Platten bestehende Schieberführung nicht konzipiert.

Durch die AU-A-40238/68 ist ein Absperrschieber bekannt, der dem Wortlaut der eingangs genannten Merkmalsaufzählung entspricht. Das Rohrteil dieses Absperrschiebers ist allerdings eine aus elastischem Material bestehende Dichtbuchse für ein kegelförmiges Verschlußstück. Die in der Dichtbuchse vorhandenen Aussparungen entsprechen den Durchgangsbohrungen des Schiebergehäuses, sie sind gewissermaßen als deren Fortsetzung anzusehen. Im Gehäuse sind keine Sitzringe angeordnet, wie es bei einem Absperrschieber mit hartdichtenden Sitzflächen der Fall wäre; die Dichtbuchse selbst bildet den weichdichtenden Sitz für das Verschlußstück.

Der Erfindung liegt die Aufgabe zugrunde, einen Absperrschieber der eingangs genannten Art zu schaffen, der eine leicht auswechselbare Schieberführung auch im Zusammenhang mit im Gehäuse des Absperrschiebers angeordneten Sitzringen zur Verfügung stellt.

Die gestellte Aufgabe wird erfindungsgemäß gelöst durch den kennzeichnenden Teil des Hauptanspruches. Es ist bei der Montage lediglich erforderlich, die Schieberführung von oben in das Gehäuse einzuschieben. Infolge der Aussparungen kann das Rohrteil die Sitzringe übergreifen und somit bis zum Bodenteil des Absperrschiebers hinabreichen. Die Aussparungen sind ähnlich einer U-förmigen Ausnehmung.

In vorteilhafter Ausgestaltung der Erfindung erfolgt die Zentrierung der auswechselbaren Schieberführung durch die im Gehäuse des Absperrschiebers befindlichen Sitzringe, wobei die Aussparungen am Rohrteil der Schieberführung den Außenkonturen der Sitzringe entsprechen. Eine Aufweitung einer solchen Aussparung des Rohrteiles auf der dem Gehäuseboden des Absperrschiebers zugekehrten Seite, die sich nach oben auf eine dem Außendurchmesser der Sitzringe angepaßte Weise verjüngt, erlaubt ein schnelles, paßgerechtes Einsetzen der Schieberführung. Die im unteren Bereich des Rohrteiles befindliche Aufweitung mit nachfolgender Verjüngung bewirkt bei einem ungenauen Einsetzen eine Selbstzentrierung der Schieberführung. Um die Schieberführung auch schnell wieder aus dem Gehäuse herausnehmen zu können, kann diese mit mehreren, von der Innenseite her zugänglichen Ausnehmungen für eine Abziehvorrichtung versehen sein.

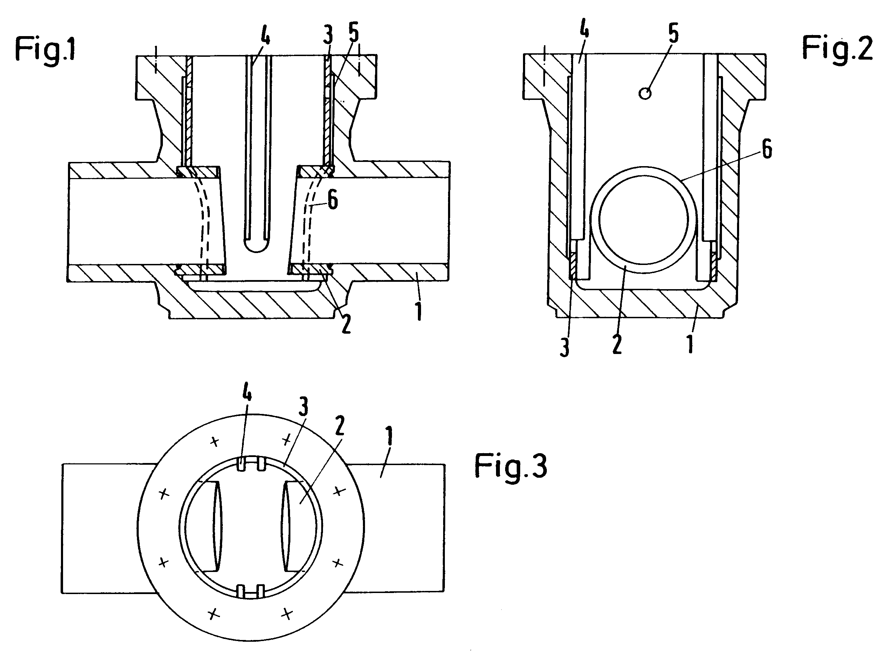

Anhand eines Ausführungsbeispiels wird die Erfindung näher erläutert. Die Zeichnung zeigt das Gehäuse eines erfindungsgemäßen Absperrschiebers mit einer eingefügten Schieberführung in drei Ansichten, wobei die Fig. 1 und 2 Schnittdarstellungen sind.

Das Schiebergehäuse (1) ist mit eingeschweißten Sitzringen (2) ausgestattet, welche exakt zur Rohrleitungsachse bearbeitet sind. In das Schiebergehäuse (1) ist ein Rohrteil (3) eingeschoben, welches Führungsleisten (4) besitzt, die wiederum exakt rechtwinklig zur Rohrleitungsachse verlaufen. Das Rohrteil (3) verfügt im übrigen über mehrere, über den Umfang verteilte Ausnehmungen (5) für eine - nicht dargestellte - Abziehvorrichtung.

Der Zentrierung des Rohrteils (3) im Gehäuse (1) dienen mechanisch bearbeitete Aussparungen (6), die die Sitzringe (2) übergreifen und auf deren oberen, halbkreisförmigen Außenkontur paßgenau anliegen.

Da die Schieberführung als ein vom Gehäuse (1) trennbares Rohrteil (3) ausgebildet ist, kann für diese ein den besonderen Anforderungen angepaßtes Material ausgewählt werden. Die integrierten Führungsleisten (4) können gepanzert oder gehärtet sein. Somit ist diese erfindungsgemäße Schieberführung nicht nur wesentlich verschleißbeständiger als eine in das Gehäuse integrierte Schieberführung; sie kann auch leicht ausgewechselt werden, ohne daß das Schiebergehäuse aus der Rohrleitung herausgetrennt werden muß.

## Patentansprüche

1. Absperrschieber mit einem in das Gehäuse (1) des Absperrschiebers eingeschobenen, mit Aussparungen (6) versehenen Rohrteil (3), welches ausgestattet ist mit zwei Führungsleisten (4) für das Verschlußstück des Absperrschiebers, **dadurch gekennzeichnet,** daß die im Rohrteil (3) angeordneten Aussparungen (6) zum in der Einschiebrichtung liegenden Rohrteilende offen sind und daß sie die in dem Gehäuse (1) befindlichen Sitzringe (2) teilweise umgreifen.

2. Absperrschieber nach Anspruch 1, dadurch gekennzeichnet, daß jede Aussparung (6) eine der Führung und Zentrierung des Rohrteiles (3) dienende Kontur besitzt, deren oberer Teil der Außenkontur des mit ihr korrespondierenden Sitzringes (2) entspricht.

3. Absperrschieber nach den Ansprüchen 1 und 2, dadurch gekennzeichnet, daß die Aussparung (6) im unteren Bereich eine Aufweitung besitzt, die sich nach oben auf eine dem Außendurchmesser des Sitzringes (2) angepaßte Weite verjüngt.

4. Absperrschieber nach Anspruch 1, dadurch gekennzeichnet, daß das Rohrteil (3) mit mehreren von der Innenseite her zugänglichen Ausnehmungen (5) für eine Abziehvorrichtung versehen ist.

## Claims

1. A gate valve comprising a tube part (3) inserted into the housing (1) of the gate valve and having recesses (6), said tube part being fitted with two guide rails (4) for the closure member of the gate valve, characterized in that the recesses (6) provided in the tube part (3) are open toward the tube parts arranged in the direction of insertion and in that they partly extend around the seat rings (2) located in the housing (1).

2. The gate valve as claimed in claim 1, characterized in that each recess (6) possesses a configuration serving for guiding and centering the tube part (3), the upper part of such configuration corresponding to the outer surface of the corresponding seat ring (2).

3. The gate valve as claimed in claim 1 and in claim 2, characterized in that the recess (6) in the lower portion has a widened part, which tapers upwardly to a width adapted to the outer diameter of the seat ring (2).

4. The gate valve as claimed in claim 1, characterized in that the tube part (3) is provided with a plurality of recesses (5) accessible from the inside for a traction tool.

## Revendications

1. Vanne d'arrêt avec tubulure (3) munie d'évidements (6) et entrée dans le boîtier (1) de la vanne d'arrêt, tubulure équipée de deux barres conductrices (4) pour l'obturateur de la vanne d'arrêt caractérisée en ce que les évidements (6) placés dans la tubulure (3) vers l'extrêmité de la tubulure placée dans le sens de l'entrée sont ouverts et qu'ils s'aggripent en partie sur les bagues de positionnement (2) situées dans le boîtier (1).

2. Vanne d'arrêt selon la revendication 1 caractérisée en ce que chaque évidement (6) possède un contour servant au guidage et au centrage de la tubulure (3), contour dont la pièce supérieure correspond au contour extérieur de la bague de positionnement (2) qui lui correspond.

3. Vanne d'arrêt selon les revendications 1 et 2 caractérisée en ce que l'évidement (6) possède dans sa partie inférieure un élargissement qui se rétrécit vers le haut pour atteindre la largeur adaptée au diamètre extérieur de la bague de positionnement (2).

4. Vanne d'arrêt selon la revendication 1 caractérisée en ce que la tubulure (3) présente plusieurs creux (5) accessibles par l'intérieur pour un dispositif d'échappement.
